Europäisches Patentamt

(19) European Patent Office

Office européen des brevets

(11) Publication number:

**0 086 659**
**B1**

(12) **EUROPEAN PATENT SPECIFICATION**

(45) Date of publication of patent specification: **13.05.87**

(21) Application number: **83300742.0**

(22) Date of filing: **15.02.83**

(51) Int. Cl.⁴: **G 11 B 5/09,** G 11 B 27/08, G 11 B 15/52

(54) **Apparatus for recording and reproducing a digital signal.**

(30) Priority: **15.02.82 JP 22288/82**

(43) Date of publication of application:
**24.08.83 Bulletin 83/34**

(45) Publication of the grant of the patent:
**13.05.87 Bulletin 87/20**

(84) Designated Contracting States:
**CH DE FR GB LI**

(56) References cited:
**BE-A- 889 911**
**BE-A- 890 108**
**FR-A-2 456 987**
**GB-A-2 080 997**
**US-A-4 145 683**
**US-A-4 222 079**

(73) Proprietor: **SONY CORPORATION**
**7-35 Kitashinagawa 6-Chome Shinagawa-ku Tokyo 141 (JP)**

(72) Inventor: **Watanabe, Nobuhiko c/o Patent Division**
**Sony Corporation 7-35 Kitashinagawa-6 Shinagawa-ku Tokyo (JP)**
Inventor: **Tanaka, Masato c/o Patent Division Sony Corporation 7-35 Kitashinagawa-6 Shinagawa-ku Tokyo (JP)**

(74) Representative: **Thomas, Christopher Hugo et al**
**D Young & Co 10 Staple Inn London WC1V 7RD (GB)**

Courier Press, Leamington Spa, England.

## Description

This invention relates to apparatus for recording and reproducing a digital signal, and particularly to an apparatus for recording and reproducing a digital signal in the form of successive data blocks, each data block including at least a plurality of data words and a block address.

In the case of a pulse code modulation (PCM) system tape recorder of fixed head type, it is known, when a magnetic tape is transported at a predetermined speed, to record a servo pulse signal of predetermined frequency on the magnetic tape. Then, on reproduction, a phase-locked loop (PLL) servo circuit is employed to phase-compare the reproduced servo pulse signal with a reference phase signal to produce a compared output by which the running speed of the magnetic tape is controlled. But when the phase of the servo pulse signal varies considerably before and after an edit point on splice-editing or simple electronic editing, the tape phase compared output becomes large and the running speed of the magnetic tape is varied substantially, so that in consequence the time base of the reproduced data may vary considerably. In such a case it may not be possible to extract the clock signal from the reproduced data and a time base error or variation beyond the correction range of a time base corrector (TBC) will take place.

Furthermore, in the PCM-system tape recorder, sync recording is carried out to record a digital signal so as not to lose continuity with a previously recorded digital signal. In this case, a preceding reproducing head is used to re-record a new signal so as to make a block address conform to the predetermined recording format. Therefore, the generation phase of the block address must be changed before and after the phase jump of the servo pulse signal occurs.

Our Belgian patent specification BE—A—889 911 discloses an example of apparatus according to the pre-characterizing part of claim 1 of the present application. U.S. patent specification US—A—4 222 079 discloses a PCM recording and reproducing system with a servo for controlling running of the magnetic tape in dependence on a phase compared output signal. The necessary phase comparison is effected by a selector to which is supplied a reproduced control signal derived from the tape, and a reference phase signal the frequency of which is a multiple of the frequency of the control signal and which is derived from a phase locked oscillator controlled by the output of the selector.

According to the present invention there is provided apparatus for recording and reproducing a digital signal, said digital signal being in the form of successive data blocks, each data block including at least a plurality of data words and a block address which cycles with a predetermined phase relative to a reference signal, and being recorded on a recording medium on which is also recorded a control signal in accordance with said reference signal, said apparatus comprising:

means for reproducing said data words and block addresses within said data blocks from said recording medium;

time base correcting means for correcting a time base error contained in a reproduced data word;

means for reproducing the control signal from said recording medium; and

means for recording said data blocks, each including said data words and block addresses on said recording medium;

characterised by:

means for generating a reference phase signal with a multiple phase relation relative to said control signal;

means for comparing said reference phase signal with said reproduced control signal so as to select that phase of said reference phase signal which is closest to the phase of said reproduced control signal and to generate a phase difference output signal indicative of the phase difference between the selected phase of said reference phase signal and the phase of said reproduced control signal, and a lock mode signal indicating the selected phase of said reference phase signal;

servo means for controlling running of said recording medium by said phase difference output signal;

means for generating a block address for recording; and

address changing means for changing said block address for recording in response to said lock mode signal to restore said block address to the required relation with said control signal, said lock mode signal unambiguously corresponding to the change required to effect said restoration.

The invention will now be described with reference to the accompanying drawings, throughout which like parts are referred to by like references, and in which:

Figure 1 and Figures 2A and 2B are schematic diagrams each representing one example of track patterns;

Figure 3 is a schematic diagram representing one example of an arrangement of recording and reproducing heads;

Figure 4 is a schematic block diagram showing an overall arrangement of an embodiment of apparatus according to the invention;

Figures 5A to 5D are timing diagrams used to explain the operation of a polyphase servo circuit used in the apparatus of Figure 4;

Figure 6 is a schematic block diagram showing a block address generator used in the apparatus of Figure 4; and

Figures 7A to 7D and Figures 8A and 8B are timing diagrams used to explain the operation of the apparatus of Figure 4.

In the embodiment to be described, the invention is applied to a fixed head (or fixed transducer) type PCM tape recorder.

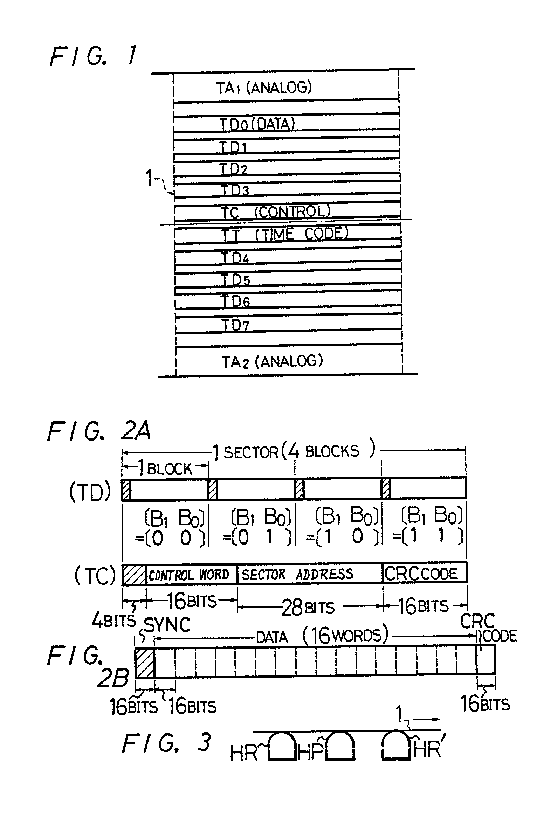

As shown in Figure 1, on a magnetic tape 1 of 0.633 mm ($\frac{1}{4}$-inch) width are formed eight data tracks TD0 to TD7, two analog tracks TA1 and TA2, a control track TC and a time code track TT.

On the eight data tracks TD0 to TD7 are recorded respective audio PCM signals of eight channels, each being encoded in a predetermined way.

As illustrated in Figure 2A, the data tracks TD (TD0 to TD7) and the control track TC are coincident with each other in their recording positions for each sector in the width direction. One sector of each of the data tracks TD includes data of four blocks. As shown in Figure 2B, one block is formed of data of sixteen words, each word being formed of sixteen bits, a data synchronizing signal (shown by the hatched area in Figure 2B) added to the beginning of the data, and a cyclic redundancy check (CRC) code added to its end. A block address signal of three bits is inserted into the interval of the data synchronizing signal, and the block address signal and the data will both be checked for errors by the CRC code.

One sector of the control track TC comprises a synchronizing signal of four bits (shown by the hatched interval in Figure 2A), a control word of sixteen bits, a sector address signal of twenty-eight bits, and a CRC code of sixteen bits. The control word of sixteen bits is used to identify the sampling frequency of the PCM audio signal to be recorded and the recording format, and the sector address is the absolute address incrementing from zero address, both of which will be checked for errors by the CRC code. As a modulation method for recording the audio PCM signal on the data tracks TD, there is employed a modulation system for high density recording while a frequency-modulation system or the like is employed to record a control signal on the control track TC. The block address $(B_1 B_0)$ in one sector changes cyclically so as to appear as (00), (01), (10) and (11) in that sector.

As shown in Figure 3, there are provided magnetic heads or transducers comprising a recording head HR, a reproducing head HP and a recording head HR' which are sequentially located in that order relative to the direction in which the tape 1 is transported. Each head has ten recording or reproducing magnetic gaps each arranged in line along the width direction of the tape 1, of which eight magnetic gaps correspond to the data tracks TD0 to TD7 and the other two magnetic gaps correspond to the control track TC and the time code track TT, respectively. The first recording on the tape 1 is carried out by the recording head HR, and in the case of sync-recording, cut-in/cut-out and so on, the recording head HR' is employed. The control track TC once written by the recording head HR is not rewritten, but only the data tracks TD are rewritten.

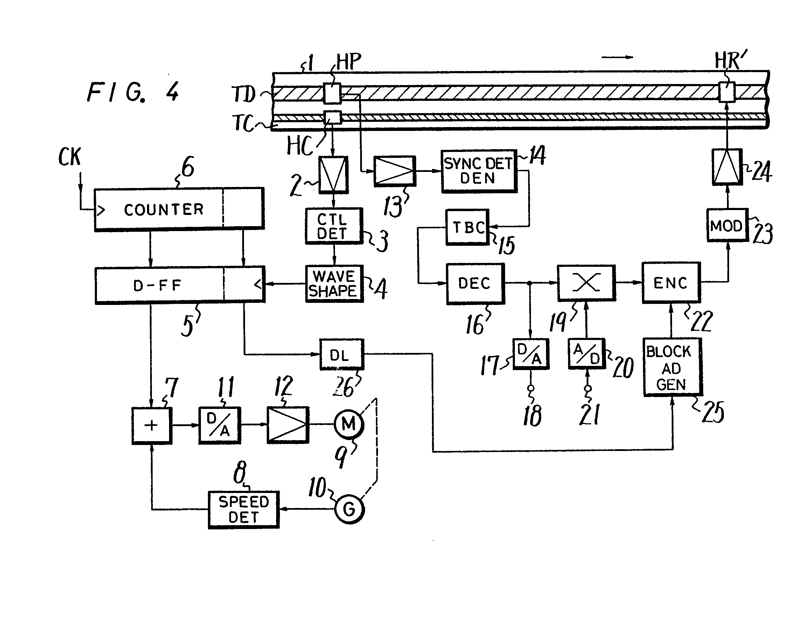

Figure 4 schematically illustrates the embodiment of apparatus for recording and reproducing in which a PCM signal is reproduced by the reproducing head HP from the data tracks TD and the control track TC is reproduced by a control head HC.

The output from the control head HC is supplied through a reproducing amplifier 2 to a control (CTL) detection circuit 3 in which a CTL signal is detected by detecting a synchronizing signal at every one sector. This CTL signal is supplied to a waveform shaping circuit 4 which produces at its output a servo pulse signal. This servo pulse signal is supplied to a D-type flip-flop circuit 5 for phase comparison as its clock input.

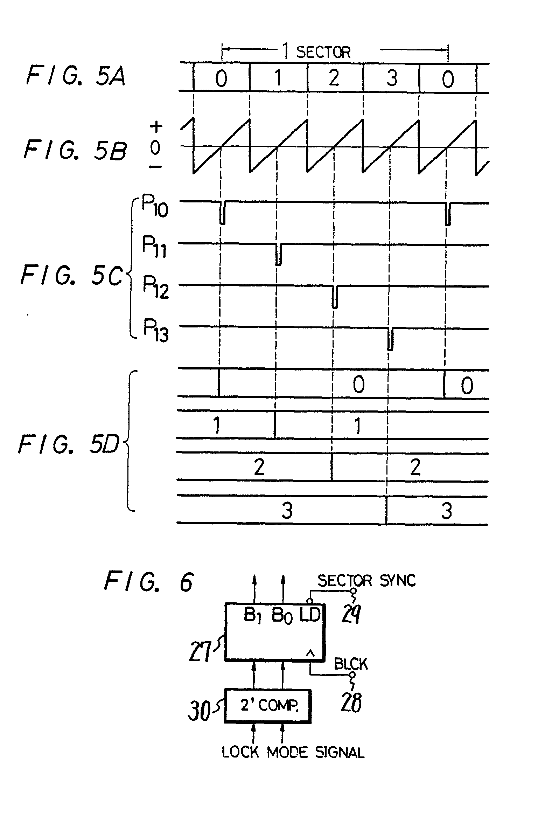

A counter 6 counts a clock pulse signal CK, and a plurality of bits other than the two most significant bits of the counter 6 are parallel-supplied to the flip-flop circuit 5 as a reference signal. As illustrated in Figure 5A, the two most significant bits of the counter 6 repeatedly change with the cycle corresponding to one sector so as to appear as 0, 1, 2 and 3, while as shown by a sawtooth wave in Figure 5B, the less significant bits thereof change their values stepwise at every clock pulse CK. The reference signal of which the value changes stepwise is formed on the basis of a 2's complementary code, and the value thereof is changed symmetrically around zero, which is repeated four times per sector.

The flip-flop circuit 5 is arranged to sample any one phase of the four-phase reference signal by the servo pulse signal, and then produces at its output a phase comparison output and a lock mode signal. The phase comparison output is supplied to an adder 7 and therein added to an output from a speed detection circuit 8. The detection of speed is carried out such that a signal with a frequency proportional to a revolution rate of a capstan motor 9 is generated by a tacho-generator 10, and the frequency of this signal is converted in the speed detection circuit 8 into a corresponding level. The output from the adder 7 is converted by a digital-to-analog (D/A) converter 11 into an analog signal which is then supplied through a servo amplifier 12 to the capstan motor 9, which is a DC motor.

The servo circuit as so far described transports the tape 1 at the predetermined speed with its phase locked to the reference signal. This phase-locking is performed for any one phase of the 4-phase reference signal. In Figures 5C, $P_{10}$, $P_{11}$, $P_{12}$ and $P_{13}$ respectively denote servo pulses in the state of being phase-locked to the respective reference phases of zero mode, first mode, second mode and third mode. Since in the flip-flop circuit 5, the most significant two bits of the counter 6 are sampled, the flip-flop circuit 5 generates lock mode signals as shown in Figure 5D in response to the servo pulse signal with its phase locked to the zero mode to the third mode.

The reproduced data (which is considered as data of one channel for simplicity) from the reproducing head HP is supplied through a reproducing amplifier 13 to a sync detection and demodulation circuit 14 from which reproduced data and a block synchronizing signal are supplied to a time base corrector (TBC) 15. The output from the TBC 15 is supplied to a reproducing decoder 16 which then performs processing such as error correction, error concealment and so on to produce a reproduced audio PCM signal. This reproduced audio PCM signal is supplied through a (D/A) converter 17 to an output terminal 18 and is supplied to a cross-fader 19 as one input thereof.

The cross-fader 19 is also supplied with a recording audio PCM signal from an analog-to-digital (A/D) converter 20 as its other input. The A/D converter 20 has an input terminal 21 to which an audio signal is supplied from a mixer (not shown) or the like. The cross-fader 19 is operated selectively to produce either of the two inputs and gradually to decrease the level of the previous data (fade-out) while gradually increasing the level of the new data (fade-in). The output from the cross-fader 19 is supplied to a recording encoder 22 in which it is converted into the aforesaid recording data and then supplied through a modulation circuit 23 and a recording amplifier 24 to the recording head HR' thereby to be recorded on the data tracks TD. The recorder encoder 22 is arranged to process the recording audio PCM signal for error correction encoding and to add thereto a block address signal.

In Figure 4, a block address generator 25 is associated with the recording encoder 22. The block address generator 25 is supplied with the lock mode signal from the flip-flop circuit 5 through a delay circuit 26. The delay circuit 26 has a delay time necessary for supplying the lock mode signal representing the previous phase relation to the block address generator 25 until a splice-editing point is detected by the reproducing head HP and then passed through the recording head HR'. In other words, this is because the capstan servo circuit employs the CTL signal played back by the CTL head HC placed at the same position as that of the preceding reproducing head HP.

Figure 6 illustrates a practical arrangement of the block address generator 25 in which a 2-bit counter 27 counts a block clock BLCK from a terminal 28 and then produces a block address BA of two bits, $B_0$ and $B_1$, changing sequentially at every block. The counter 27 is supplied at its load terminal LD with a sector synchronizing pulse SYNC from a terminal 29. The sector synchronizing pulse SYNC is formed from a system reference signal, having a period of one sector, similar to the servo reference phase signal. By this sector synchronizing signal SYNC, a lock mode signal supplied through a logic circuit 30 is preset in the counter 27. The purpose of the logic circuit 30 is to convert the lock mode signal of two bits into 2's complementary code as follows;

00 to 00
01 (1) to 11 (3)
10 (2) to 10 (2)
11 (3) to 01 (1)

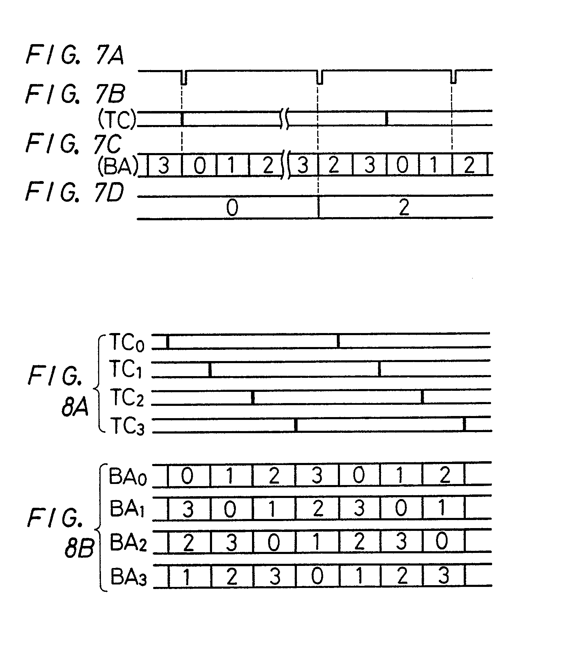

Figure 7A illustrates the sector synchronizing signal SYNC with a sector period. The purpose of the polyphase servo circuit is to synchronize the phase of the synchronizing signal from the control track TC with any one phase of the 4-phase reference phase signal. If the lock mode is in the zero mode, for the sector synchronizing pulse shown in Figure 7A, the control track TC becomes as shown in Figure 7B. Each of the vertical solid lines in Figure 7B represents the phase of the synchronizing signal from the control track TC. Accordingly, from the synchronizing signal of the control track TC, the block address BA changes so as to appear as 0 to 1 to 2 to 3 as shown in Figure 7C. That is, as shown in Figure 7D, the lock mode signal is at "0" and the output from the logic circuit 30 is also at "0", which are then preset by the sector synchronizing pulse SYNC in the counter 27. Thereafter, they are incremented by the block clock BLCK and again preset by the sector synchronizing pulse SYNC.

If now, due to a splice-editing point or cue, the phase of the synchronizing signal from the control track TC jumps, or as, for example, shown in Figure 7B, the period thereof becomes 1.5 times the previous period, as will be clear from the above description of the polyphase servo circuit, the lock mode is changed to the second mode and as shown in Figure 7D, the lock mode signal changes to two. Then, the 2's complementary code becomes two and is preset by the sector synchronizing pulse SYNC in the counter 27. Accordingly, as shown in Figure 7C, after the sector synchronizing pulse SYNC occurs behind the splice-editing point, the block address BA becomes the same as the recording format for the control track TC.

Figure 8A illustrates respectively the phases of the control tracks TC0, TC1, TC2 and TC3 in the lock modes of zero mode, first mode, second mode and third mode. The phase of the synchronizing signal from the control track TC0 in the zero mode is coincident with that of the sector synchronizing pulse SYNC as mentioned before. Then, the block address generator 25 shown in Figure 6 generates block addresses BA0, BA1, BA2 and BA3 shown in Figure 8B, each corresponding to each lock mode. Since these block addresses BA0, BA1, BA2 and BA3 are added to the recorded data, the data recorded by the recording transducer head HR' is made coincident with the recording format mentioned at the beginning of this description, so that when reproducing, the TBC employing the block address to process the reproduced data are operated correctly.

As will be understood from the above description, since the servo pulse detected from the recording medium is phase-locked to any one phase of the polyphase reference signal, even when the phase of the servo pulse jumps as at a splice-editing point, the running speed variation of the recording medium can be kept small, and moreover, the block address of the data to be newly recorded can be generated so as to prevent the phase relation between the servo pulse and the block address of data from changing before and after the splice-editing point. In this case, since the lock mode signal from the polyphase servo circuit is employed, the correct block address can be generated by a simple arrangement.

The polyphase servo circuit is not limited to four phases, it is enough that the reference phase signal has a frequency which is an integral multiple of more than twice the frequency of the control signal. Moreover, a reference phase signal may be used which becomes a trapezoidal waveform or a triangular waveform when converted into an analog waveform.

Furthermore, the invention is not limited to the use of magnetic tape, but can be applied with the same action and effect to a recording medium of disc shape.

**Claims**

1. Apparatus for recording and reproducing a digital signal, said digital signal being in the form of successive data blocks, each data block including at least a plurality of data words and a block address which cycles with a predetermined phase relative to a reference signal, and being recorded on a recording medium (1) on which is also recorded a control signal in accordance with said reference signal, said apparatus comprising: means (HP) for reproducing said data words and block addresses within said data blocks from said recording medium (1); time base correcting means (15) for correcting a time base error contained in a reproduced data word; means (HC) for reproducing the control signal from said recording medium (1); and means (HR') for recording said data blocks, each including said data words and block addresses on said recording medium (1); characterised by: means (6) for generating a reference phase signal with a multiple phase relation relative to said control signal; means (5) for comparing said reference phase signal with said reproduced control signal so as to select that phase of said reference phase signal which is closest to the phase of said reproduced control signal and to generate a phase difference output signal indicative of the phase difference between the selected phase of said reference phase signal and the phase of said reproduced control signal, and a lock mode signal indicating the selected phase of said reference phase signal; servo means (7 to 12) for controlling running of said recording medium (1) by said phase difference output signal; means (25) for generating a block address for recording; and address changing means (27, 30) for changing said block address for recording in response to said lock mode signal to restore said block address to the required relation with said control signal, said lock mode signal unambiguously corresponding to the change required to effect said restoration.

2. Apparatus according to claim 1 wherein said means (6) for generating said reference phase signal includes a counter (6) to which is supplied a clock signal with a constant frequency, the output of said counter (6) forming said reference phase signal, and said means (5) for comparing is formed of a D-type flip-flop circuit (5) to which is supplied said reference phase signal and said reproduced control signal.

3. Apparatus according to claim 2 wherein said means (25) for generating said block address is formed of a counter (27) to which is supplied a clock signal with a period of said data block, and said address changing means (27, 30) includes means (30) for code-converting said lock mode signal and presetting said counter (27) by a code-converted signal.

**Patentansprüche**

1. Aufzeichnungs- und Wiedergabegerät für digitale Signale, wobei die digitalen Signale in Form von aufeinanderfolgenden Datenblöcken vorliegen, wobei jeder Datenblock mindestens mehrere Datenworte und eine Blockadresse enthält, die zyklisch mit einer vorbestimmten Phase relativ zu einem Referenzsignal umläuft, und auf einem Aufzeichnungsmedium (1) aufgezeichnet ist, auf welchem auch ein Steuersignal in Übereinstimmung mit dem Referenzsignal aufgezeichnet ist, wobei das Gerät aufweist: eine Wiedergabeeinrichtung (HP) zum Wiedergeben der Datenworte und Blockadressen innerhalb der Datenblöcke von dem Aufzeichnungsmedium (1), eine Zeitbasiskorrektureinrichtung (15) zum Korrigieren eines Zeitbasisfehlers, der in einem wiedergegebenen Datenwort enthalten ist, eine Wiedergabeeinrichtung (HC) zum Wiedergeben des Steuersignals von dem Aufzeichnungsmedium (1) sowie eine Aufzeichnungseinrichtung (HR') zum Aufzeichnen der Datenblöcke auf dem Aufzeichnungsmedium (1), deren jeder die Datenworte und Blockadressen enthält, gekennzeichnet durch eine Generatoreinrichtung (6) zum Erzeugen eines Referenzphasensignals mit einer Mehrfachphasenrelation relativ zu dem Steuersignal, eine Vergleichseinrichtung (5) zum Vergleichen des Referenzphasensignals mit dem wiedergegebenen Steuersignal, um so die jenige Phase des Referenzphasensignals zu wählen, die der Phase des wiedergegebenen Steuersignals am nächsten ist, und um ein Phasendifferenzausgangssignal, das die Phasendifferenz zwischen der gewählten Phase des Referenzphasensignals und der Phase des wiedergegebenen Steuersignals anzeigt, sowie ein Verriegelungsbetriebsartsignal zu erzeugen, das die gewählte Phase des Phasenreferenzsignals anzeigt, eine Servoeinrichtung (7 bis 12) zum Steuern des Laufs des Aufzeichnungsmediums (1) durch das Phasendifferenzausgangssignal, eine Generatoreinrichtung (25) zum Erzeugen einer Blockadresse zum Aufzeichnen und eine Adreßänderungseinrichtung (27, 30) zum Ändern der Blockadresse zum Aufzeichnen abhängig vom Verriegelungsbetriebsartsignal, um die Blockadresse in der erforderlichen Relation mit dem Steuersignal wiederherzustellen, wobei das Verriegelungsbetriebsartsignal eindeutig mit der Änderung korrespondiert, die erforderlich ist, um die Wiederherstellung zu bewirken.

2. Gerät nach Anspruch 1, bei dem die Generatoreinrichtung (6) zum Erzeugen des Referenzphasensignals einen Zähler (6) aufweist, dem ein Taktsignal mit konstanter Frequenz zugeführt ist, wobei das Ausgangssignal des Zählers (6) das Referenzphasensignal bildet, und bei dem die Vergleichseinrichtung (5) ein D-Flipflop (5) aufweist, dem das Referenzphasensignal und das wiedergegebene Steuersignal zugeführt sind.

3. Gerät nach Anspruch 2, bei dem die Generatoreinrichtung (25) zum Erzeugen der Blockadresse einen Zähler (27) aufweist, dem ein Taktsignal mit der Periode des Datenblocks zugeführt wird, und bei dem die Adreßänderungseinrichtung (27, 30) eine Einrichtung (30) zum Umcodieren des Verriegelungsbetriebsartsignals und zum Voreinstellen des Zählers (27) durch ein umcodiertes Signal enthalten.

## Revendications

1. Appareil d'enregistement et de reproduction d'un signal numérique, le signal numérique étant sous la forme de blocs de données successifs, chaque bloc de données incluant au moins un ensemble de mots de données et une adresse de bloc qui se répète cycliquement avec une phase prédéterminée par rapport à un signal de référence, et étant enregistré sur un support d'enregistrement (1) où est également enregistré un signal de commande conformément au signal de référence, l'appareil comprenant:

un moyen (HP) pour reproduire les mots de données et les adresses de blocs contenus dans les blocs de données à partir du support d'enregistrement (1);

un moyen de correction de base de temps (15) pour corriger une erreur de base de temps contenue dans un mot de données reproduit;

un moyen (HC) pour reproduire le signal de commande à partir du support d'enregistrement (1); et

un moyen (HR') pour enregistrement les blocs de données, chacun incluant les mots de données et les adresses de blocs sur le support d'enregistrement (1);

caractérisé par:

un moyen (6) pour engendrer un signal de phase de référence avec une relation de phase multiple par rapport au signal de commande;

un moyen (5) pour comparer le signal à phase de référence au signal de commande reproduit de manière à sélectionner la phase du signal à phase de référence qui est la plus proche de la phase du signal de commande reproduit et à engendrer un signal de sortie de différence de phase indiquant la différence de phase entre la phase sélectionnée du signal à phase de référence et la phase du signal de commande reproduit, et un signal de mode de blocage indiquant la phase sélectionnée du signal à phase de référence;

un moyen d'asservissement (7 à 12) pour régler le défilement du support d'enregistrement (1) par le signal de sortie de différence de phase;

un moyen (25) pour engendrer une adresse de bloc pour un enregistrement; et

un moyen de changement d'adresse (27, 30) pour changer l'adresse de bloc pour un enregistrement en réponse au signal de mode de blocage pour rétablir l'adresse de bloc en relation voulue avec le signal de commande, le signal de mode de blocage correspondant d'une manière non ambiguë au changement voulu pour effectuer ce rétablissement.

2. Appareil selon la revendication 1, dans lequel le moyen (6) pour engendrer le signal à phase de référence comprend un compteur (6) auquel est fourni un signal d'horloge de fréquence constante, le signal de sortie du compteur (6) constituant le signal à phase de référence, et le moyen (5) de comparaison est constitué d'un circuit à bascule de type D (5) auquel est fourni le signal à phase de référence et le signal de commande reproduit.

3. Appareil selon la revendication 2, dans lequel le moyen (25) pour engendrer l'adresse de bloc est constitué d'un compteur (27) auquel est fourni un signal d'horloge ayant la période du bloc de données, et le moyen de changement d'adresse (27, 30) comprend un moyen (30) pour convertir en code le signal de mode de blocage et prérégler le compteur (27) par un signal converti en code.

FIG. 1

| TA₁ (ANALOG) |
| TD₀ (DATA) |
| TD₁ |
| TD₂ |
| TD₃ |
| TC (CONTROL) |
| TT (TIME CODE) |
| TD₄ |
| TD₅ |
| TD₆ |
| TD₇ |
| TA₂ (ANALOG) |

1

FIG. 2A

1 SECTOR (4 BLOCKS)

1 BLOCK

(TD)

$(B_1 \ B_0)$ $=(0 \ 0)$ | $(B_1 \ B_0)$ $=(0 \ 1)$ | $(B_1 \ B_0)$ $=(1 \ 0)$ | $(B_1 \ B_0)$ $=(1 \ 1)$

(TC)

| CONTROL WORD | SECTOR ADDRESS | CRC CODE |

16 BITS — 28 BITS — 16 BITS

4 BITS    SYNC    DATA (16 WORDS)    CRC CODE

FIG. 2B

16 BITS  16 BITS    16 BITS

FIG. 3    HR ⌐⌐ HP ⌐⌐ ⌐⌐ HR'

1

FIG. 4

0 086 659

*FIG. 5A*

*FIG. 5B*

*FIG. 5C*

*FIG. 5D*

*FIG. 6*

SECTOR SYNC

$B_1$ $B_0$ LD  29

27

BLCK

30  2' COMP.  28

LOCK MODE SIGNAL

*FIG. 7A*

*FIG. 7B*
(TC)

*FIG. 7C*
(BA) | 3 | 0 | 1 | 2 | 3 | 2 | 3 | 0 | 1 | 2 |

*FIG. 7D*
0        2

*FIG. 8A*

TC$_0$
TC$_1$
TC$_2$
TC$_3$

*FIG. 8B*

BA$_0$ | 0 | 1 | 2 | 3 | 0 | 1 | 2 |
BA$_1$ | 3 | 0 | 1 | 2 | 3 | 0 | 1 |
BA$_2$ | 2 | 3 | 0 | 1 | 2 | 3 | 0 |
BA$_3$ | 1 | 2 | 3 | 0 | 1 | 2 | 3 |